Europäisches Patentamt

European Patent Office

Office européen des brevets

(19)

(11) **EP 0 510 461 B1**

(12) **EUROPEAN PATENT SPECIFICATION**

(45) Date of publication and mention
of the grant of the patent:
**20.11.1996  Bulletin 1996/47**

(51) Int Cl.⁶: **G09G 1/04**, H04N 3/223

(21) Application number: **92106249.3**

(22) Date of filing: **10.04.1992**

(54) **Auto scan horizontal deflection apparatus**

Horizontalablenkungvorrichtung mit automatischer Abtastung

Dispositif de déflection horizontale à balayage automatique

(84) Designated Contracting States:
**DE FR GB**

(30) Priority: **24.04.1991  JP 119165/91**

(43) Date of publication of application:
**28.10.1992  Bulletin 1992/44**

(73) Proprietor: **MITSUBISHI DENKI KABUSHIKI KAISHA**
**Tokyo (JP)**

(72) Inventor: **Bando, Takahiro,**
**c/o Nagasaki Seisakusho**
**Nagasaki-shi Nagasaki-ken (JP)**

(74) Representative: **KUHNEN, WACKER & PARTNER**
**Patent- und Rechtsanwaltsbüro,**
**Alois-Steinecker-Strasse 22**
**85354 Freising (DE)**

(56) References cited:
**CA-A- 1 235 822**         **US-A- 4 574 224**
**US-A- 4 677 350**

• **PATENT ABSTRACTS OF JAPAN vol. 11, no. 346
(E-556) 12 November 1987 ; & JP-A-62 126 775**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to an auto scan horizontal deflection apparatus capable of obtaining constant horizontal amplitude even when horizontal deflection frequency is changed.

CA-A-1 235 822 is directed to a system for regulation of pictures in case of a varying scan frequency in which a control signal generator is connected to a variable scan frequency source and generates control signals for the deflection system. There, the horizontal amplitude is kept constant by detecting changes in frequency.

US-A-4 677 350 discloses a deflection circuit which can operate with a plurality of scanning frequencies. The deflection circuit includes a diode modulator and is designed in such manner that the voltage in a trace capacitor increases in the same proportion as the supply voltage. Thus, the raster width can be kept unchanged when the scan frequency increases. A voltage regulator receives signals from the secondary side of a transformer the primary side of which is inserted into the regulated supply voltage line.

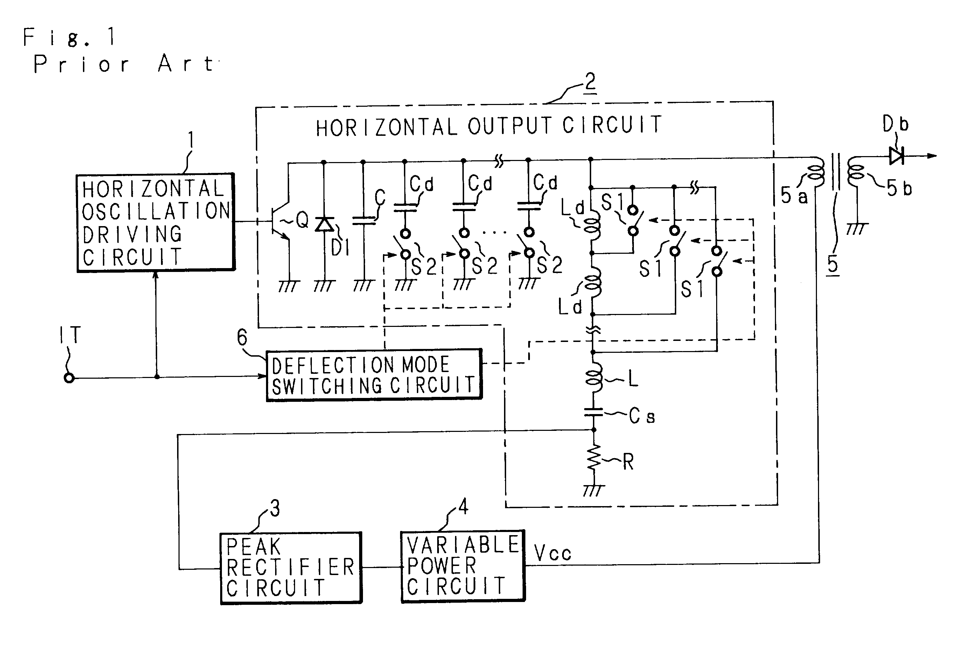

Fig. 1 is a block diagram showing a conventional auto scan horizontal deflection apparatus disclosed, for example, in Japanese Utility Model Application Laid-Open No. 63-56865 (1988). In the figure, reference numeral 1 designates a horizontal oscillation driving circuit to which a horizontal synchronizing signal is inputted from an exterior image apparatus through an input terminal IT, and numeral 2 designates a horizontal output circuit driven by the output of the horizontal oscillation driving circuit 1.

In the horizontal output circuit 2, symbol Q designates a switching transistor which is switched by the output of the horizontal oscillation driving circuit 1, and D1 designates a damper diode thereof. Symbol L designates a horizontal deflection coil, and C designates a resonance capacitor connected with the horizontal deflection coil L in parallel.

In addition, a plurality of dummy coils Ld, each of which can be short-circuited by a switch S1, are connected in series with the horizontal deflection coil L, and a plurality of dummy capacitors Cd, each of which is grounded at its one end through a switch S2, are connected in parallel with the resonance capacitor C.

Symbol Cs designates an S form compensation capacitor connected in series with the horizontal deflection coil L, and R designates a detection resistance connected in series with the S form compensation capacitor Cs in order to detect a horizontal deflection current I flowing through the horizontal deflection coil L.

Reference numeral 3 designates a peak rectifier circuit which detects voltage drop between both of the terminals of the detection resistance R, and 4 designates a variable power circuit in which a source voltage Vcc to be outputted is controlled by the output voltage of the peak rectifier circuit 3 serving as control signal.

Reference numeral 5 is a choke transformer supplying the source voltage Vcc from the variable power circuit 4 to the horizontal output circuit 2 through a primary winding 5a, and a high-voltage output is outputted from a secondary winding 5b thereof through a diode Db.

Reference numeral 6 is a deflection mode switching circuit controlling opening/closing of the switches S1 and S2 in the horizontal output circuit 3, responsive to the frequency of the inputted horizontal synchronizing signal.

Next, explanation will be given on the operation. A plurality of dummy windings Ld which can optionally be short-circuited by the switches S1 are connected in series with the horizontal deflection coil L so that the power voltage Vcc of the horizontal output circuit 2 is not changed to a large extent when the frequency of the inputted horizontal synchronizing signal is changed.

In addition, at the resonance capacitor C, a plurality of dummy capacitors Cd are connected in parallel each of which having one end grounded respectively by the switch S2 so that the ratio Ts/Tr of the horizontal scanning time Ts to the horizontal flyback time Tr may be kept almost constant by changing the horizontal flyback time Tr.

These switches S1, S2 are switched by the deflection mode switching circuit 6 according to frequencies of the inputted horizontal synchronizing signals of a television unit system (15 to 17 KHz), a high density personal computer system (22 to 26 KHz), a high density CAPTAIN (Character and pattern telephone access information network:videotex) system (29 to 34 KHz) and so on.

By the way, the horizontal width of an image projected on a picture tube is decided by the horizontal deflection current I when the anode voltage of the picture tube is constant. The relation between the horizontal deflection current I and the source voltage Vcc of the horizontal output circuit 2 is shown by the following equation (1).

$$I = Vcc \cdot \frac{Ts}{L + Ld} \qquad (1)$$

Accordingly, a variation of the horizontal width can be limited to a certain extent by changing the inductance L + Ld including the horizontal deflection coil L when the horizontal scanning time Ts is changed with the horizontal deflection frequency. In order to make the horizontal width constant usually, however, the source voltage Vcc is required to variable-control by detecting the horizontal deflection current I.

Therefore, the detection resistance R is connected with the S form compensation capacitor Cs and the voltage drop between both of the terminals of this detection resistance R is detected by the peak rectifier circuit 3. Then, the variable voltage circuit 4 is controlled so that the value of the detected voltage drop may be constant, thereby adjusting the source voltage Vcc outputted therefrom.

In addition, as another prior art, it is referred to Japanese Patent Application Laid-Open No. 62-5781 (1987), titled as "a deflection circuit". The subject matter of this Japanese Patent Application Laid-Open No. 62-5781 (1987) is so constructed as to carry out almost a constant horizontal deflection by changing the electric source potential of the horizontal output circuit to be saw-tooth-like responsive to the input frequency of the horizontal synchronizing signal.

In the conventional auto scan horizontal deflection apparatus according to above-mentioned JP-A-63-56865 electric power is largely lost according to the detection resistance R, and the deflection current I becomes large especially when a large-sized monitor is used. Therefore electric power loss becomes great and cannot be neglected, this leading the apparatus to be impractical.

The apparatus according to above-mentioned JP-A-62-5781 has a possibility that the horizontal scan width changes when the input frequency of the horizontal synchronizing signal changes because no feedback of the horizontal scan width is provided.

The present invention has been devised considering these circumstances, and the primary object thereof is to provide an auto scan horizontal deflection apparatus in which power loss is small and the horizontal amplitude is almost constant even when the horizontal deflection frequency changes linearly.

The auto scan horizontal deflection apparatus according to the invention comprises the features mentioned in claim 1.

The auto scan horizontal deflection apparatus of the invention regulates the source voltage to be supplied to the horizontal output circuit by feedback-controlling the variable power circuit voltage based on the magnitude of the flyback pulse induced at the detecting winding arranged at the secondary side of the choke transformer between the variable power circuit and the horizontal output circuit, and the voltage obtained by frequency/voltage converting the horizontal deflection frequency, so that the horizontal deflection width is kept constant regardless of the horizontal deflection frequency and only little electric power is lost. Thus, the horizontal amplitude thereof becomes almost constant even when the horizontal deflection frequency changes.

The above and further objects and features of the invention will more fully be apparent from the following detailed description with accompanying drawings.

Fig. 1 is a block diagram showing a construction of Japanese Utility Model Application Laid-Open No. 63-56865 (1988) as a conventional example,
Fig. 2 is a block diagram showing a construction of one embodiment of the auto scan horizontal deflection apparatus of the invention,
Fig. 3 is a block diagram showing a construction example of a frequency discriminating circuit thereof,
Fig. 4 is a graph showing a change of the horizontal flyback time to horizontal frequency according to an auto scan horizontal deflection apparatus of the invention,
Fig. 5 is a graph showing a change of the detecting voltage of a voltage detecting circuit similarly to the horizontal frequency,
Fig. 6 is a graph showing a change of an output voltage of a frequency/voltage converting circuit similarly to the horizontal frequency, and
Fig. 7 is a circuit diagram showing a construction of a frequency/voltage converting circuit of another embodiment of the invention.

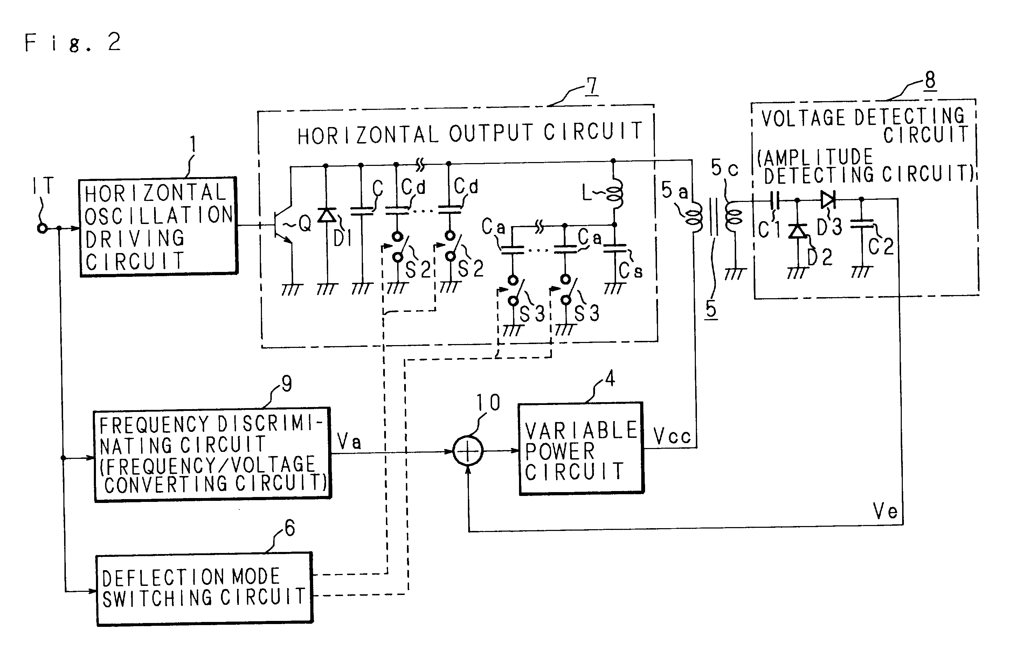

In the following, a first embodiment of the invention will be described referring to the drawings. In Fig. 2, reference numeral 1 designates a horizontal oscillation driving circuit, 4 designates a variable power circuit, 5 a choke transformer, 6 a deflection mode switching circuit, Q a switching transistor, D1 a damper diode, L a horizontal deflection coil, C a resonance capacitor, S2 a switch, Cd a dummy capacitor, and Cs a S form compensation capacitor. The explanation therefor will be omitted, for they are the same or correspond to conventional ones having the same symbols in Fig. 1.

In addition, Ca designates a plurality of adjusting capacitors connected in parallel with the aforesaid S form compensation capacitor Cs, and S3 is a switch grounding the adjusting capacitors Ca selectively, and numeral 7 designates a horizontal output circuit being different from the conventional one in that the dummy winding Ld, switch S1 and detection resistance R are removed and the aforesaid adjusting capacitor Ca and switch S3 are added.

Numeral 8 designates a voltage detecting circuit as an amplitude detecting circuit, which is connected with a detecting winding 5c arranged at the secondary side of the aforesaid choke transformer 5, rectifies the flyback pulse induced by said detecting winding 5c by diodes D2, D3 and capacitors C1, C2 and outputs a detecting voltage Ve responsive to the amplitude thereof.

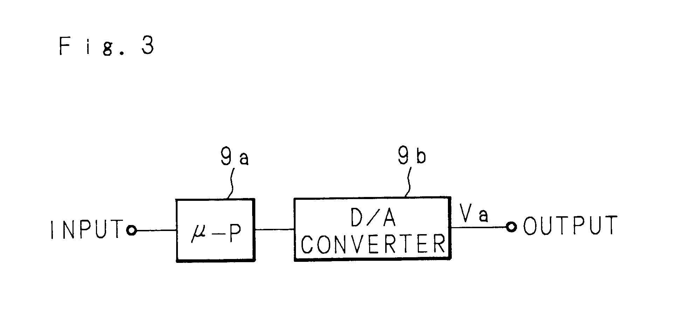

Numeral 9 designates a frequency/voltage converting circuit as a frequency discriminating circuit which discriminates the frequency of a horizontal synchronizing signal inputted through an input terminal IT. The frequency/voltage converting circuit 9, as shown in, for example, Fig. 3, is composed of a microprocessor ($\mu$-P) 9a and a digital/analog converter (hereinafter, to be called a D/A converter) 9b, and converts, by the D/A converter 9b, a voltage value based on the frequency of horizontal synchronizing signal and calculated by the micro-processor 9a into an analog voltage Va and outputs it.

Numeral 10 designates an adding circuit as a control signal generating circuit generating a control signal for the aforesaid variable power circuit 4 on the basis of the outputs of the voltage detecting circuit 8 and the frequency/ voltage converting circuit 9, wherein the detecting voltage Ve of the voltage detecting circuit 8 and the output voltage Va of the frequency/voltage converting circuit 9 are added together.

Next, explanation will be given on the operation. The flyback pulse induced by the detecting winding 5c arranged at the secondary side of the choke transformer 5 is rectified by the diodes D2, D3 and capacitors C1, C2 of the voltage detecting circuit 8 to obtain the detecting voltage Ve. The detecting voltage Ve and the horizontal deflection current I are respectively shown by the following equations (2) and (3).

$$Ve = K \cdot \frac{\pi}{2} \cdot \frac{Ts}{Tr} \cdot Vcc \qquad (2)$$

$$I = Vcc \cdot \frac{Ts}{L} \qquad (3)$$

Here, K designates a proportional constant, Ts and Tr respectively designate the horizontal scanning time and the horizontal flyback time, Vcc the power source voltage of the horizontal output circuit 7 and L designates the inductance of the horizontal deflection coil L. According to the above equations (2) and (3), the horizontal deflection current I and the detecting voltage Ve have a relation shown by the following equation (4).

$$I = Vcc \cdot \frac{Ts}{L} = \frac{Tr \cdot Ve}{K \cdot (\pi/2) \cdot L} \qquad (4)$$

Here, since the denominator of this equation is constant, when the horizontal flyback time Tr is constant, that is, in the horizontal frequency of same condition of the switch S2, when the detecting voltage Ve is made constant, it is understood that the horizontal deflection current I is constant. In order to make this detecting voltage Ve constant, it is preferable to feedback the detecting voltage Ve to the variable power circuit 4.

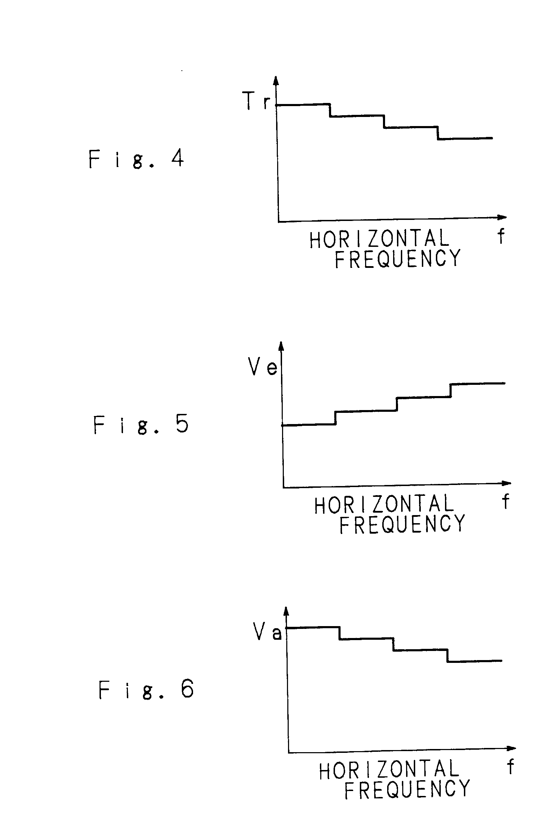

Next, in the case where the horizontal flyback time Tr is changed, it is preferable to make the detecting voltage Ve to change so as to be inversely proportional to the horizontal flyback time Tr. That is, in the case where the horizontal flyback time Tr changes with respect to the horizontal frequency as shown in Fig. 4, it is preferable to change the detecting voltage Ve of the voltage detecting circuit 8 as shown in Fig. 5. In order to do that, it is preferable to determine the output voltage Va of the frequency/voltage converting circuit 9 as shown in Fig. 6.

Accordingly, the microprocessor 9a of the frequency/voltage converting circuit 9 is made to perform a calculation which outputs data shown in fig. 5 with respect to the frequency of the inputted synchronizing signal and the calculated result is converted into an analog voltage by the D/A converter 9b to generate the output voltage Va.

The output voltage Va of the frequency/voltage converting circuit 9 and the detecting voltage Ve of the aforesaid voltage detecting circuit 8 are added by the adding circuit 10 and inputted as control signal to the variable power circuit 4 to adjust the power source voltage Vcc to be supplied from the variable power circuit 4 to the horizontal output circuit 7.

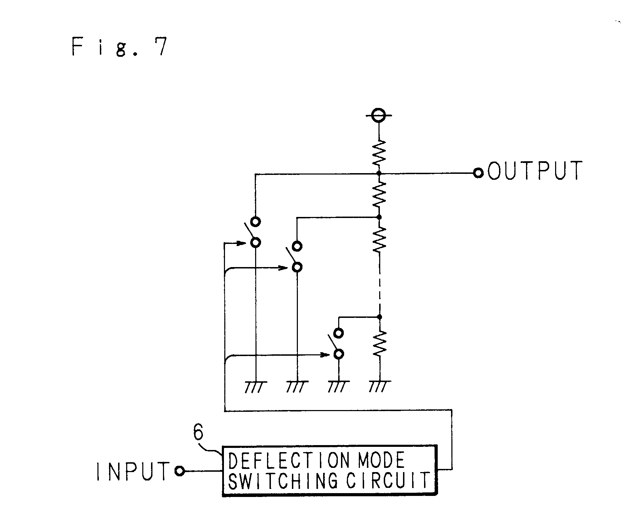

In addition, in the above embodiment, the frequency/voltage converting circuit 9 is composed of the microprocessor 9a and the D/A converter 9b as shown. However, a circuit shown in Fig. 7 wherein, for example, resistances connected in series are selectively grounded by switches each of which is opened/closed according to the output of the deflection mode switching circuit 6, is also preferable, being as effective as the above embodiment.

As above-mentioned, according to this invention, since the voltage based on the amplitude of a flyback pulse induced at the detecting winding arranged at the secondary side of the choke transformer between the variable power circuit and the horizontal output circuit and the voltage obtained by frequency/voltage converting the horizontal deflection frequency are fed-back to the variable power circuit so as to adjust the power source voltage to be supplied to the horizontal output circuit, it becomes possible that the horizontal deflection width is kept constant regardless of the horizontal deflection frequency. Thereby it is effective in providing an auto scan horizontal deflection apparatus whose electric power loss is only small and whose horizontal amplitude is almost constant even when horizontal deflection frequency is changed.

## Claims

1. An auto scan horizontal deflection apparatus, comprising:

a variable power circuit (4) which outputs a voltage controlled by a control signal, as a power source voltage (Vcc);
a horizontal output circuit (7) which has a choke transformer (5), is supplied with the power source voltage from said variable power circuit (4) through a primary winding (5a) of said choke transformer (5), is driven by a horizontal synchronizing signal inputted from exterior and includes a resonance capacitor (C, Cd);
a switch ($S_2$) for switching said resonance capacitor (C, Cd); and
a frequency discriminating circuit (9) which discriminates a frequency of said horizontal synchronizing signal,

characterized by

an amplitude detecting circuit (8) detecting the amplitude of a flyback pulse induced at a detecting winding (5c) arranged at the secondary side of said choke transformer (5); and

a control signal generating circuit (10), which generates the control signal for said variable power circuit (4) on the basis of the outputs (Ve, Va) of said amplitude detecting circuit (8) and said frequency discriminating circuit (9).

2. An auto scan horizontal deflection apparatus as set forth in Claim 1, wherein said amplitude detecting circuit (8) is a voltage detecting circuit which detects the amplitude of a flyback pulse induced at the detecting winding (5c) arranged at the secondary side of said choke transformer (5), as voltage.

3. An auto scan horizontal deflection apparatus as set forth in claim 1 or 2, wherein said frequency discriminating circuit (9) comprises

a microprocessor (9a) which calculates a frequency of inputted horizontal synchronizing signal; and
a digital/analog converter (9b) which outputs an analog voltage signal on the basis of a frequency calculated by said microprocessor (9a).

4. An auto scan horizontal deflection apparatus as set forth in claim 1 or 2, wherein said frequency discriminating circuit (9) comprises

a deflection mode switching circuit (6) which outputs different signals according to frequencies of an inputted horizontal synchronizing signal;
a resistance circuit in which a plurality of resistances are connected in series between a power source potential and earth potential; and
a plurality of switches one end of each of which is connected with a node between each resistance of said resistance circuit and another end with the earth potential and being on/off controlled respectively by outputs of said deflection mode switching circuit (9) being different from each other;
whereby a voltage signal responsive to the output of said deflection mode switching circuit (6) is outputted from said resistance circuit in the case where any of said plurality of switches is on corresponding to the output of said deflection mode switching circuit (6).

**Patentansprüche**

1. Horizontalablenkvorrichtung mit automatischer Abtastung, enthaltend:

eine leistungsveränderbare Schaltung (4), welche eine durch in Steuersignal gesteuerte Spannung als Spannung ($V_{cc}$) einer Leistungsquelle abgibt;

eine Horizontal-Ausgangsschaltung (7), welche einen Drossel-Transformator (5) hat, von der leistungsveränderbaren Schaltung (4) mit der Spannung der Leistungsquelle über eine Primärwicklung (5a) des Drossel-Transformators (5) gespeist wird, von einem Horizontal-Synchronisiersignal beaufschlagt wird, das von außen eingegeben wird, und einen Resonanzkondensator (C, Cd) enthält;

einen Schalter ($S_2$) zum Schalten des Resonanzkondensators (C, Cd); und

eine Frequenzdiskriminatorschaltung (9), welche eine Frequenz des Horizontal-Synchronisiersignales unterscheidet;

gekennzeichnet durch

eine Amplitudendetektorschaltung (8), welche die Amplitude eines Rücklaufimpulses detektiert, der in einer Detektorwicklung (5c) induziert wird, die auf der Sekundärseite des genannten Drossel-Transformators (5) angeordnet ist; und

eine steuersignalerzeugende Schaltung (10), welche das Steuersignal für die leistungsveränderbare Schaltung (4) auf der Basis der Ausgänge (Ve, Va) der amplitudendetektierenden Schaltung (8) und der Frequenzdiskriminatorschaltung (9) erzeugt.

2. Horizontalablenkvorrichtung mit automatischer Abtastung nach Anspruch 1, bei welcher die amplitudendetektierende Schaltung (8) eine Spannungsdetektorschaltung ist, welche die Amplitude eines Rücklaufimpulses, der in der Detektorwicklung (5c) auf der Sekundärseite des genannten Drossel-Transformators (5) indurziert wird, als Spannung detektiert.

3. Horizontalablenkvorrichtung mit automatischer Abtastung nach Anspruch 1 oder 2, bei welcher die Frequenzdiskriminatorschaltung (9) folgendes enthält:

einen Mikroprozessor (9a), welcher eine Frequenz eines eingegebenen Horizontal-Synchronisiersignales errechnet; und

einen nigital-/Analog-Umsetzer (9b), der ein analoges Spannungssignal auf der Basis einer durch den Mikroprozessor (9a) errechneten Frequenz abgibt.

**4.** Horizontalablenkvorrichtung mit automatischer Abtastung nach Anspruch 1 oder 2, bei welcher die Frequenzdiskriminatorschaltung (9) folgendes enthält:

    eine Ablenkmodus-Schaltervorrichtung (6), welche unterschiedliche Signale entsprechend den Frequenzen eines eingegebenen Horizontal-Synchronisiersignales abgibt;

    eine Widerstandsschaltung, in der eine Mehrzahl von Widerständen in Serie zwischen ein Potential einer Leistungsquelle und Erdpotential geschaltet sind; und

    eine Mehrzahl von Schaltern, die jeweils mit einem Ende an einen Verbindungspunkt zwischen jedem Widerstand der Widerstandsschaltung und mit ihrem anderen Ende mit dem Erdpotential verbunden sind und die durch die jeweils voneinander verschiedenen Ausgänge der Ablenkmodus-Schaltvorrichtung (6) in Einschalt-Stellung bzw. Ausschalt-Stellung gesteuert werden;

    wobei ein Spannungssignal entsprechend dem Ausgang der Ablenkmodus-Schaltvorrichtung (6) von der Widerstandsschaltung in dem Falle abgegeben wird, in dem jeder der Vielzahl von Schaltern entsprechend dem Ausgang der Ablenkmodus-Schaltvorrichtung (6) eingeschaltet ist.

## Revendications

**1.** Un dispositif de déflexion horizontale à balayage automatique, comprenant:

    un circuit électrique de puissance variable (4) qui sort une tension contrôlée par un signal de contrôle, comme une source de tension de puissance (Vcc);
    un circuit de sortie horizontale (7) équipé d'un transformateur à self (5), est alimenté par la source de tension de puissance à partir dudit circuit électrique de puissance variable (4) via un enroulement primaire (5a) dudit transformateur à self (5), est commandé par un signal de synchronisation horizontale entré de l'extérieur et comprend un condensateur de résonance (C, Cd);
    un interrupteur (S2) pour commuter ledit condensateur de résonance (C, Cd); et
    un circuit de discrimination de fréquence (9) qui discrimine une fréquence dudit signal de synchronisation horizontale,

caractérisé par

    un circuit détecteur d'amplitude (8) détectant l'amplitude d'une impulsion de retour induite à un enroulement détecteur (5c), disposé sur le secondaire dudit transformateur à self (5); et un circuit produisant un signal de contrôle (10), qui crée le signal de contrôle pour ledit circuit électrique de puissance variable (4) sur base des sorties (Ve, Va) du circuit détecteur d'amplitude (8) et dudit circuit de discrimination de fréquence (9).

**2.** Un dispositif de déflexion horizontale à balayage automatique, comme présenté dans la revendication 1, dans lequel ledit circuit de détection d'amplitude (8) est un circuit de détection de tension, qui détecte l'amplitude d'une impulsion de retour induite à l'enroulement détecteur (5c) disposé sur le secondaire dudit transformateur à self (5), comme tension.

**3.** Un dispositif de déflexion horizontale à balayage automatique, comme présenté dans la revendication 1 ou 2, dans lequel ledit circuit de discrimination de fréquence (9) comprend

    un microprocesseur (9a) qui calcule une fréquence du signal de synchronisation horizontale entré, et
    un convertisseur analogique numérique (9b), qui sort un signal de tension analogique sur base de la fréquence calculée par ledit microprocesseur (9a).

**4.** Un dispositif de déflexion horizontale à balayage automatique, comme présenté dans la revendication ou 2, dans lequel le circuit de discrimination de fréquence (9) comprend

    un circuit de commutation de mode de déflexion (5), qui sort différents signaux suivant les fréquences du signal de synchronisation horizontale entré;
    un circuit à résistances dans lequel de nombreuses résistances sont connectées en série entre le potentiel d'une source de tension et le potentiel de la terre, et
    de nombreux interrupteurs dont une extrémité de chaque interrupteur est connectée à un noeud de liaison entre les résistances dudit circuit à résistances et l'autre extrémité au potentiel de la terre et la commande de fermeture/ouverture s'effectue par les sorties respectives du circuit de commutation du mode de déflexion (9) qui diffèrent l'une de l'autre;

où un signal de tension répondant à la sortie dudit circuit de commutation de mode de déflexion (6) est sorti à partir dudit circuit à résistances dans le cas où n'importe lequel des nombreux interrupteurs en question est activé conformément à la sortie dudit circuit de commutation de mode de déflexion (6).

Fig.1
Prior Art

EP 0 510 461 B1

Fig. 2

Fi**g**. 3

9 a                          9 b

INPUT o———| $\mu$ −P |———| D/A CONVERTER | Va o—— OUTPUT

Fig. 4

Tr

HORIZONTAL
FREQUENCY

f

Fig. 5

Ve

HORIZONTAL
FREQUENCY

f

Fig. 6

Va

HORIZONTAL
FREQUENCY

f

Fig. 7

OUTPUT

6

INPUT

DEFLECTION MODE
SWITCHING CIRCUIT